Europäisches Patentamt

European Patent Office

Office européen des brevets

(19)

(11) **EP 0 471 527 B1**

(12) **EUROPEAN PATENT SPECIFICATION**

(45) Date of publication and mention
of the grant of the patent:
**29.12.1997 Bulletin 1997/52**

(51) Int Cl.⁶: **G11B 11/10**

(21) Application number: **91307371.4**

(22) Date of filing: **09.08.1991**

(54) **Method and system for reproducing information from a magnetic recording medium**

Verfahren und System zur Wiedergabe von Information auf einem magnetischen Aufzeichnungsträger

Procédé et système de reproduction d'information d'un milieu d'enregistrement magnétique

(84) Designated Contracting States:
**DE FR GB IT NL**

(30) Priority: **11.08.1990 JP 212166/90**
**31.10.1990 JP 296308/90**

(43) Date of publication of application:
**19.02.1992 Bulletin 1992/08**

(73) Proprietor: **SHARP KABUSHIKI KAISHA**
**Osaka 545 (JP)**

(72) Inventors:
• **Nakajima, Junsaku**
**Yamatotakada-shi, Nara-ken (JP)**
• **Takahashi, Akira**
**Nara-shi, Nara-ken (JP)**

• **Hirokane, Junji**
**Nara-shi, Nara-ken (JP)**
• **Murakami, Yoshiteru**
**Nishinomiya-shi, Hyogo-ken (JP)**
• **Ohta, Kenji**
**Kitakatsuragi-gun, Nara-ken (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 349 271          DE-A- 3 536 210**
**US-A- 4 926 402**

## Description

### FIELD OF THE INVENTION

The present invention relates to a method of reproducing information from a magnetic recording medium, and to an information recording/reproducing system which performs such a method.

### BACKGROUND OF THE INVENTION

Recently, information recording/reproduction apparatuses utilizing optical techniques have been widely studied and developed. For example, in magneto-optical recording/reproduction apparatuses, thermomagnetic recording making use of the phenomenon that magnetic characteristics of a magneto-optical recording medium vary with temperatures is adopted for writing information, while the Faraday effect and the magnetic Kerr effect are utilized for reproducing information.

On the other hand, in a technical research report of Electronic Information Communication Institute, Magnetic Recording Seminar (MR) 79-3, P. 21(1979), there is described an information recording-reproduction apparatus wherein analog signals are recorded on a magnetic tape through thermomagnetic recording, and reproduced by a magnetic head. Chromium dioxide is used as a material for the magnetic layer of the magnetic tape. During recording, while converging a light beam with a predetermined intensity on the magnetic layer of the travelling magnetic tape to cause a required temperature change on an extremely limited area on the magnetic layer, a residual magnetization is formed on the magnetic layer in response to a magnetic field applied from a recording-use magnetic head by supplying the recording-use magnetic head with a driving current varying with analog signals. The information thus recorded is reproduced by a reproduction-use magnetic head.

In the above arrangement, as long as the condition that a width of the reproduction-use magnetic head is smaller than the pitch of recording tracks on the magnetic tape is satisfied, a high S/N can be achieved during reproduction, since crosstalk from adjoining tracks can be minimized. However, if the density of the recording tracks is increased in order to increase the recording capacity, the pitch of the recording tracks should be made narrower, thereby producing a problem that it is difficult to manufacture reproduction-use magnetic heads satisfying the above condition.

EP-A-0 349 271 filed by the present applicant discloses a magneto-optic memory medium having a memory film made of an amorphous rare earth-transition metal alloy whose composition provides a magnetic compensation temperature near to room temperature. A conventional method of reproducing information from this memory medium is described, in which the medium is irradiated with a laser beam and the reflected light is analysed for detection of the magnetic Kerr effect.

EP-0-542 910 A (published on 20th February 1992, claimed priority date 10th August 1990) describes a thermomagnetic recording medium having a magnetizable recording layer comprising rare earth and transition metals. Reproduction is performed by heating the layer locally and sensing the magnetisation by means of a magnetic head.

### SUMMARY OF THE INVENTION

It is an object of the present invention to provide an improved method of reproducing information from a magnetic recording medium for permitting high density information recording and reproduction.

In one aspect this invention, provides a method of reproducing information from a magnetic recording medium as defined by claim 1.

According to the invention, during reproduction, crosstalk due to leakage flux from adjacent tracks not irradiated by light is eliminated, so that the pitch of the tracks can be made narrower, thereby increasing recording density of the magnetic recording medium. Further, since crosstalk from adjacent tracks is eliminated, a high S/N can be achieved.

In an embodiment of the invention, during reproduction, the light beam is projected onto a reproducing portion until it causes a temperature rise whereby the saturated magnetization substantially becomes maximum. Since the saturated magnetization is zero in other portions that are not irradiated by the light beam and kept at room temperature, the magnetic head can detect with high precision magnetic flux generated only from the saturated magnetization at the portion having the temperature rise, thereby making it possible to avoid adverse effects from crosstalk.

In another aspect, this invention provides the recording/reproducing system defined by claim 9.

### BRIEF DESCRIPTION OF THE DRAWINGS

Figs. 1 through 10 illustrate one embodiment of the present invention.

Fig. 1 is a schematic sectional view showing an arrangement of a magnetic recording medium.

Fig. 2 is an explanatory drawing showing temperature dependence of coercive force of a ferrimagnetic material.

Fig. 3 is an explanatory drawing showing temperature dependence of saturated magnetization of the ferrimagnetic material.

Fig. 4 is an explanatory drawing showing X-dependence of coercive force Hc at room temperature of $Dy_X(Fe_{0.82}Co_{0.18})_{1-X}$.

Fig. 5 is an explanatory drawing showing Y-dependence of the Curie temperature of $Dy_X(Fe_{1-Y}Co_Y)_{1-X}$ used in a recording layer of the magnetic recording medium.

Fig. 6 is an explanatory drawing showing Y-dependence of saturated magnetization of $Dy_X(Fe_{1-Y}Co_Y)_{1-X}$

used in a recording layer of the magnetic recording medium.

Fig. 7 is an explanatory drawing showing temperature dependence of coercive force Hc of $Dy_{0.24}(Fe_{0.60}Co_{0.40})_{0.76}$.

Fig. 8 is a schematic drawing showing an information recording/reproduction apparatus for recording or reproducing information by the use of the magnetic recording medium.

Fig. 9 is a flow chart showing a recording method.

Fig. 10 is a flow chart showing a reproducing method.

## DESCRIPTION OF THE EMBODIMENTS

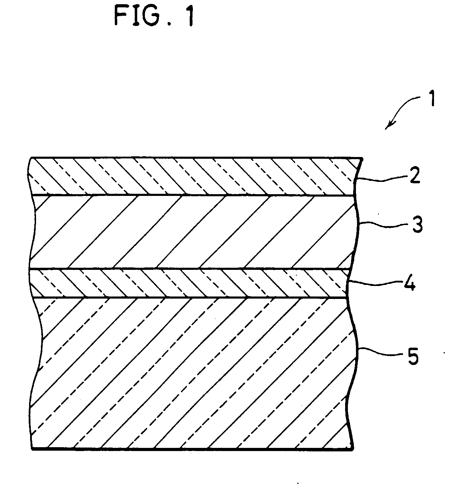

Referring to Figs. 1 through 10, the following description will discuss one embodiment of the present invention.

As illustrated in Fig. 1, a magnetic recording medium 1 has a transparent substrate 5 (base) and an AlN film 4 (aluminum nitride film, for example, 80 nm in thickness) as a transparent dielectric thin film (reflection prevention film) formed on the transparent substrate 5. The AlN film 4 is adapted to increase temperature rise efficiency by preventing reflection of light. A recording layer 3 made up of a ferrimagnetic material is formed on the surface of the AlN film 4. In accordance with the claimed invention, such ferrimagnetic material as the recording layer 3 is $Dy_X(Fe_{1-Y}Co_Y)_{1-X}$, an amorphous rare earthtransition metal alloy (for example, the recording layer has a thickness of 100 nm). An AlN film 2 (for example, 20 nm in thickness) as a transparent dielectric thin film (protection film) is formed on the surface of the recording layer 3. The AlN film 2 is disposed for protecting the recording layer 3.

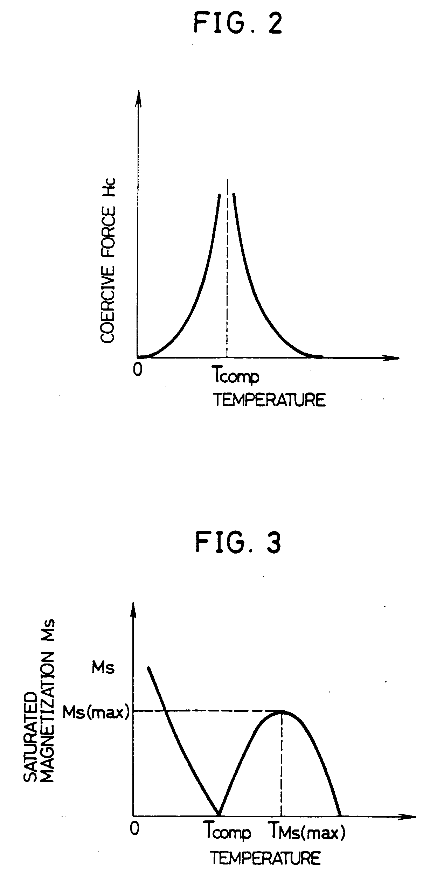

Here, the ferrimagnetic material adopted as the recording layer 3 generally has the Curie temperature Tc and the compensation temperature $T_{comp}$. Fig. 2 and Fig. 3 respectively show temperature dependences of coercive force Hc and saturated magnetization Ms with respect to the ferrimagnetic material. At the compensation temperature $T_{comp}$, the coercive force Hc diverges while the saturated magnetization Ms becomes substantial zero.

The present invention adopts $Dy_X(Fe_{1-Y}Co_Y)_{1-X}$ as the ferrimagnetic material. As X and Y of $Dy_X(Fe_{1-Y}Co_Y)_{1-X}$ are varied, the compensation temperature $T_{comp}$ and the Curie temperature Tc vary in accordance with the variations. In the magnetic recording medium 1, the recording layer 3 is adapted to have its compensation temperature $T_{comp}$ set to be within room temperatures by varying X and Y.

More specifically, if the recording layer 3 whose compensation temperature $T_{comp}$ is set to be within room temperatures is employed, a recorded portion which has been made by applying a signal magnetic field will not generate any leakage flux as long as the portion is kept at room temperature. However, when the temperature of the portion is raised by projecting a light beam or the like, the saturated magnetization Ms becomes greater as is shown in Fig. 3 to mark a maximum value Ms(max) at a temperature $T_{Ms(max)}$. Therefore, by setting a temperature T of the portion to be irradiated by the light beam within a range, $T_{comp} < T < Tc$, it can be set that the saturated magnetization Ms is equal to the maximum value Ms(max). With the arrangement, information is reproduced with high precision by detecting magnetic flux leaking from the recorded magnetization.

The following description will discuss the case of the claimed invention, where $Dy_X(Fe_{1-Y}Co_Y)_{1-X}$ is employed as the recording layer 3 of the magnetic recording medium 1.

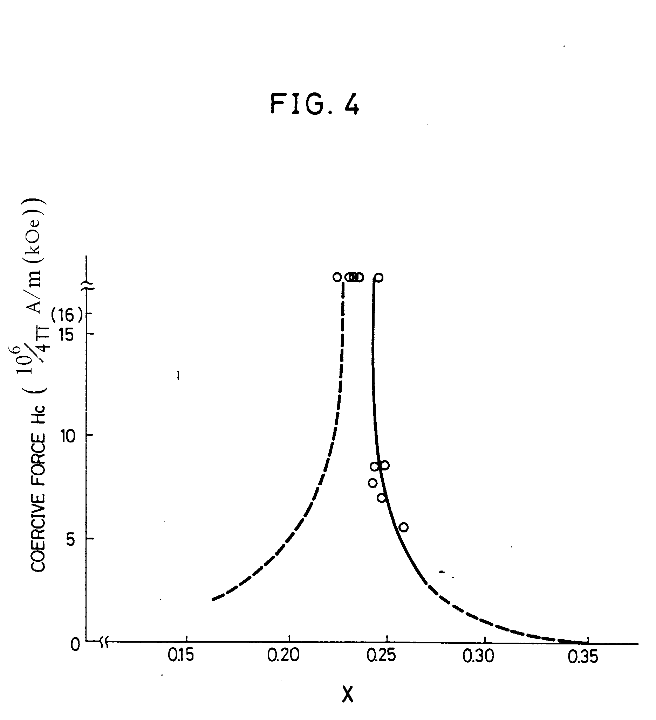

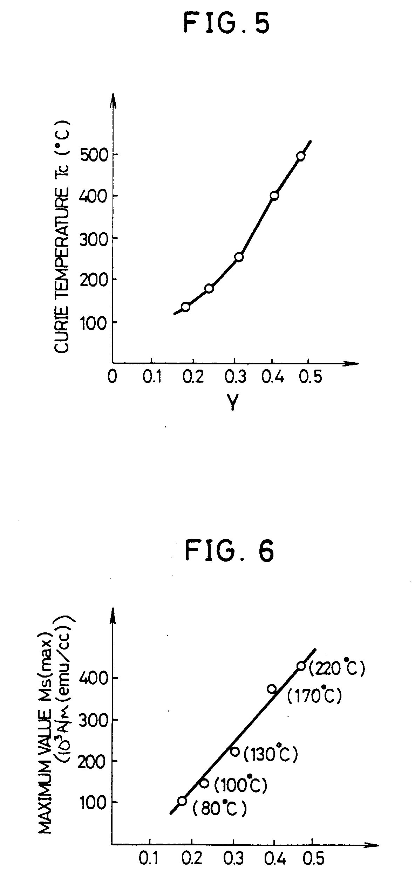

As shown in Fig. 4, in $Dy_X(Fe_{0.82}Co_{0.18})_{1-X}$, when the coercive force Hc is plotted with respect to X at room temperature, it is noted that the coercive force Hc becomes greater than $\frac{15}{4\pi} x 10^6$ A/m (15kOe) within X indicated by $0.22 \leq X \leq 0.25$, while the compensation temperature $T_{comp}$ is kept within room temperatures. Accordingly, in $Dy_X(Fe_{1-Y}Co_Y)_{1-X}$, by setting X within $0.22 \leq X \leq 0.25$, the compensation temperature $T_{comp}$ is allowed to be kept within room temperatures. When X is given by $0.22 \leq X \leq 0.25$, the Curie temperature Tc and the maximum value Ms(max) of the saturated magnetization Ms are allowed to have respective characteristics shown by Fig. 5 and Fig. 6 by varying Y as a variable. In addition, in each parenthesis of Fig. 6, there is given a temperature $T_{Ms(max)}$ at which the saturated magnetization Ms shows a maximum value Ms(max).

In the meantime, the semiconductor laser for generating a light beam to be used for raising the temperature of a portion to be reproduced can not be extremely increased in its power (not more than 10mW). Therefore, it is necessary to select a composition wherein the temperature $T_{Ms(max)}$ at which the saturated magnetization Ms marks a maximum value Ms(max) ranges near 200°C (160°C to 240°C). To satisfy this requirement, Y of $Dy_X(Fe_{1-Y}Co_Y)_{1-X}$ should be given by $0.35 \leq Y \leq 0.50$ (at this time, X is given by $0.22 \leq X \leq 0.25$). Here, 35 x $10^4$ A/m (350 emu/cc) $\leq$ Ms(max) $\leq$ 5 x $10^5$ A/m (500 emu/cc) holds (see Fig. 6). Meanwhile, for ferrimagnetic materials, at least 4 x $10^5$ A/m (400 emu/cc) is necessary for the value of the saturated magnetization Ms at a portion to be reproduced, in order to obtain enough reproducing output. Consequently, the range of Ms (max) is determined by the two requirements, that is, to obtain enough reproducing output and the upper limit of the semiconductor laser power. In the case of using $Dy_X(Fe_{1-Y}Co_Y)_{1-X}$, an inequality, 4 x $10^5$ A/m (400 emu/cc) $\leq$ Ms(max) $\leq$ 5 x $10^5$ A/m (500 emu/cc) should be satisfied. For this reason, X = 0.24 and Y = 0.40 are desirably obtained.

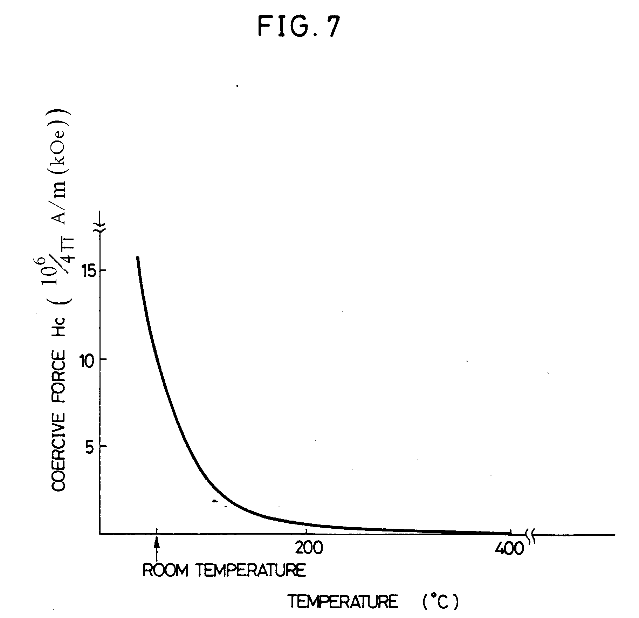

Fig. 7 shows temperature dependence of the coercive force Hc of $Dy_{0.24}(Fe_{0.60}Co_{0.40})_{0.76}$ having the desirable X and Y. Here, when Y = 0.40, the temperature $T_{Ms(max)}$ at which the saturated magnetization Ms marks a maximum value Ms(max) is 170°C, and the maximum value Ms(max) substantially reads $4 \times 10^5$ A/m (400 emu/cc) (see Fig. 6). Accordingly, in recording, the irradiated portion is raised in its temperature to 170°C, while the coercive force Hc substantially shows $\frac{10^6}{4\pi}$ A/m (1 kOe) (see Fig. 7). On the other hand, in reproduction, the irradiated portion is also raised to 170°C, while the saturated magnetization Ms at this time is $4 \times 10^5$ A/m (400 emu/cc) (see Fig.6), thereby making it possible to obtain enough reproducing output.

Additionally, for example, magnetic tapes, magnetic discs, magnetic cards, or other media may be employed as the magnetic medium 1.

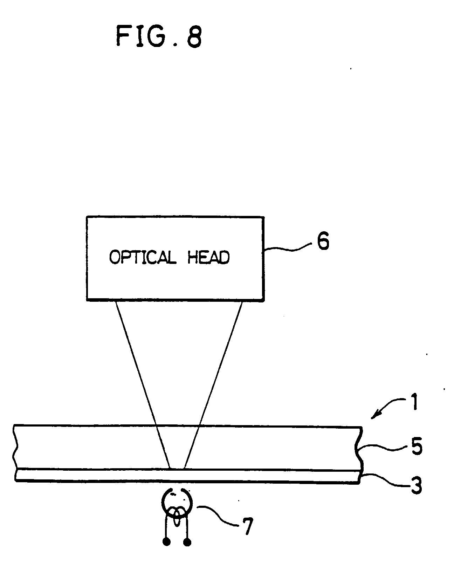

Referring to Fig. 8 through Fig. 10, the following description will discuss a method for recording information on the above-mentioned magnetic recording medium 1 and reproducing the recorded information therefrom.

Recording and reproduction of information are performed by an information recording-reproduction apparatus, for example, shown in Fig. 8. The optical head 6 is disposed at the side of the transparent substrate 5 of the magnetic recording medium 1, while the magnetic head 7 is disposed at the side of the recording layer 3 of the magnetic recording medium 1 so as to face a converging point of a light beam projected from the optical head 6.

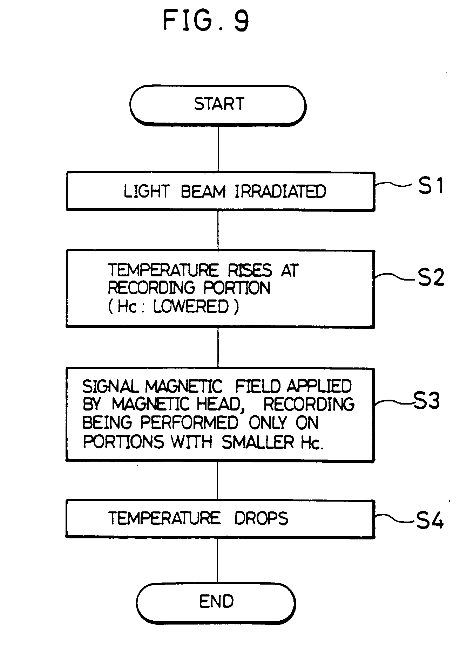

Next, according to a flow chart of Fig. 9, an explanation is given of the recording method.

As shown in Fig. 9, a light beam projected from the optical head 6 is converged on a desired recording portion on the recording layer 3 of the magnetic recording medium 1 (S1). The temperature of the recording portion irradiated by the light beam is raised to a degree at which the coercive force HC of the recording portion becomes small enough (as small as $\frac{10^6}{4\pi}$ A/m (1kOe)) (S2). Then, a signal magnetic field modulated in response to information to be recorded is applied by the magnetic head 7, and thereby recordings are made on the recording portion. At this time, the recordings are made only on the recording portion where the coercive force Hc is lowered to be substantially $\frac{10^6}{4\pi}$ A/m (1kOe) (S3). Next, the irradiation by the light beam is stopped, the temperature of the recording portion drops (S4), and the recording operation is completed.

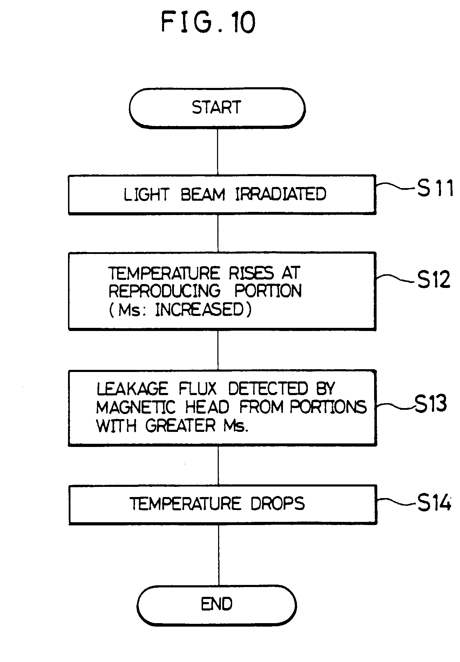

Next, according to a flow chart of Fig. 10, an explanation is given of a reproducing method of information recorded on the magnetic recording medium 1 through the above method.

First, a light beam is projected from the optical head 6 onto a reproducing portion on the recording layer 3 (S11). The temperature of the reproducing portion irradiated by the light beam is raised, and the saturated magnetization Ms of the reproducing portion is also raised (S12). At this time, the temperature is preferably raised to the vicinity of a temperature $T_{Ms(max)}$ at which the saturated magnetization Ms reaches a maximum value Ms(max). Additionally, at this time, the saturated magnetization Ms of other portions not irradiated by the light beam remains substantially zero. This is because those portions not irradiated by the light beam are kept at room temperature.

Then, leakage flux from the reproducing portion having the greater saturated magnetization Ms is detected by the magnetic head 7 (S13). Next, the irradiation applied on the reproducing portion by the light beam is stopped, the temperature of the reproducing portion drops (S14), and the reproducing operation is completed.

Additionally, various conditions of recording and reproduction with respect to the magnetic recording medium 1 are shown, for example, as follows.

The semiconductor laser for emitting a light beam has a wave length of 780 nm and a laser power of 8 mW in recording as well as in reproduction, and further an NA (Numerical Aperture) of the objective lens in the optical head 6 is 0.45. Further, the magnetic head 7 has a gap length of 0.7 μm, and the width of the magnetic head 7 (a width in the direction orthogonal to the track direction) is 30 μm. The travelling speed of the magnetic recording medium 1 is 8 m/sec and the track pitch thereof is 2 μm.

After performing a recording operation under these conditions, a resulting reproducing operation offered an output having sufficient signal quality even in a case of 4 kbit/mm (100 kBPI (Bit Per Inch)) in linear recording density, and crosstalk reduced to a sufficient level.

The invention may be embodied in other specific manners without departure from its scope as defined by the claims.

## Claims

1. A method of reproducing information from a magnetic recording medium, comprising:

   irradiating light onto a portion of the magnetic recording medium to thereby create a temperature-risen portion of said magnetic recording medium; and
   characterised in that the method comprises detecting magnetic flux leaked from said temperature-risen portion of the magnetic recording medium in order to reproduce said information; and in that the magnetic recording medium comprises a recording layer of amorphous rare earth-transition metal alloy having a composition of $Dy_X(Fe_{1-Y}Co_Y)_{1-X}$, where $0.22 \leq X \leq 0.25$ and $0.35 \leq Y \leq 0.50$, and provides a greater magnetization of the temperature-risen portion due to the irradiation of said light.

2. A method according to claim 1 wherein a range of Y in the alloy composition is given by:

   $$0.40 \leq Y \leq 0.50.$$

3. A method according to claim 1 wherein the alloy has a composition in which X is 0.24 and Y is 0.40.

4. A method according to claim 1 wherein the recording layer has a magnetic compensation temperature that is substantially equal to room temperature.

5. A method according to claim 4 wherein the magnetic compensation temperature of the recording layer is below its Curie temperature.

6. A method according to any preceding claim wherein the magnetic recording medium comprises a base having a light transmission property, and said recording layer formed on the base.

7. A method according to any preceding claim wherein the method uses a magnetic head for the detecting step.

8. A method according to claim 7 wherein the method uses an optical head for the irradiating step.

9. A recording/reproducing system comprising:

a magnetic recording medium comprising a recording layer of amorphous rare earth-transition metal alloy having a composition of $Dy_X$ $(Fe_{1-Y}Co_Y)_{1-X}$, where $0.22 \leq X \leq 0.25$ and $0.35 \leq Y \leq 0.50$, the magnetic compensation temperature of the recording layer being below its Curie temperature and substantially equal to room temperature; and
an apparatus for recording/reproducing information in tracks on the magnetic recording medium, the apparatus comprising:
a magnetic head for reproducing information recorded on the recording medium by detecting leakage magnetic flux therefrom, and
means for raising the temperature of an area of a given track from which information is to be reproduced to between its magnetic compensation temperature and its Curie temperature during reproduction so that there is sufficient residual magnetism in the area of the given track for information reproduction.

**Patentansprüche**

1. Verfahren zum Abspielen von Information von einem magnetischen Aufzeichnungsträger, umfassend:

- Aufstrahlen von Licht auf einen Abschnitt auf dem magnetischen Aufzeichnungsträger, um dadurch einen Abschnitt des magnetischen Aufzeichnungsträgers mit erhöhter Temperatur zu schaffen;

**dadurch gekennzeichnet,** dass das Verfahren folgendes umfasst:

- Erfassen des Streumagnetflusses aus dem Abschnitt des magnetischen Aufzeichnungsträgers mit erhöhter Temperatur, um die Information abzuspielen;
- und dass der magnetische Aufzeichnungsträger eine Aufzeichnungsschicht aus einer amorphen Seltenerdmetall-Übergangsmetall-Legierung mit der Zusammensetzung $Dy_X$ $(Fe_{1-Y}Co_Y)_{1-X}$ aufweist, wobei $0,22 \leq X \leq 0,25$ und $0,35 \leq Y \leq 0,50$ gelten, die eine größere Magnetisierung des Abschnitts zeigt, dessen Temperatur durch das Einstrahlen von Licht erhöht wurde.

2. Verfahren nach Anspruch 1, bei dem der Bereich von Y in der Legierungszusammensetzung durch $0,40 \leq Y \leq 0,50$ gegeben ist.

3. Verfahren nach Anspruch 1, bei dem die Legierung eine Zusammensetzung aufweist, bei der X den Wert 0,24 und Y den Wert 0,40 haben.

4. Verfahren nach Anspruch 1, bei dem die Aufzeichnungsschicht eine magnetische Kompensationstemperatur aufweist, die im Wesentlichen der Raumtemperatur entspricht.

5. Verfahren nach Anspruch 4, bei dem die magnetische Kompensationstemperatur der Aufzeichnungsschicht unter ihrer Curietemperatur liegt.

6. Verfahren nach einem der vorstehenden Ansprüche, bei dem der magnetische Aufzeichnungsträger eine Grundschicht mit Lichttransmissionseigenschaft aufweist und die Aufzeichnungsschicht auf dieser Grundschicht ausgebildet ist.

7. Verfahren nach einem der vorstehenden Ansprüche, das für den Erfassungsschritt einen Magnetkopf verwendet.

8. Verfahren nach Anspruch 7, das für den Einstrahlungsschritt einen optischen Kopf verwendet.

9. Aufzeichnungs-/Wiedergabesystem mit:

- einem magnetischen Aufzeichnungsträger mit einer Aufzeichnungsschicht aus einer amorphen Seltenerdmetall-Übergangsmetall-Legierung mit der Zusammensetzung $Dy_X$ $(Fe_{1-Y}Co_Y)_{1-X}$ mit $0,22 \leq X \leq 0,25$ und $0,35 \leq Y \leq 0,50$, wobei die magnetische Kompensationstemperatur der Aufzeichnungsschicht unter ihrer Curietemperatur liegt und im Wesentlichen der Raumtemperatur entspricht; und

- einer Vorrichtung zum Aufzeichnen/Abspielen von Information in Spuren auf dem magnetischen Aufzeichnungsträger, die folgendes aufweist:

    -- einen Magnetkopf zum Abspielen von auf dem Aufzeichnungsträger aufgezeichneter Information durch Erfassen eines Streumagnetflusses von demselben; und

    -- eine Einrichtung zum Erhöhen der Temperatur eines Gebiets einer vorgegebenen Spur, aus dem Information abzuspielen ist, auf einen Wert zwischen der magnetischen Kompensationstemperatur und der Curietemperatur, während des Abspielens, so dass ausreichender Restmagnetismus im Gebiet der vorgegebenen Spur zum Abspielen der Information vorliegt.

**Revendications**

1. Procédé de reproduction d'informations à partir d'un support d'enregistrement magnétique, comprenant :

l'application de lumière à une partie du support d'enregistrement magnétique afin de créer une partie servant à l'élévation de température dudit support d'enregistrement magnétique ; et

caractérisé en ce que le procédé comporte une détection du flux magnétique fuyant de ladite partie servant à l'élévation de température du support d'enregistrement magnétique afin de reproduire lesdites informations ;

et en ce que le support d'enregistrement magnétique comporte une couche d'enregistrement constituée d'un alliage terre rare amorphe-métal de transition de composition $Dy_X (Fe_{1-Y}CO_Y)_{1-X}$, où $0,22 \leq X \leq 0,25$ et $0,35 \leq Y \leq 0,50$, et produit une magnétisation plus importante de la partie servant à l'élévation de température du fait de l'application de ladite lumière.

2. Procédé selon la revendication 1 dans lequel la fourchette Y de la composition de l'alliage est donnée par l'inégalité :

$$0,40 \leq Y \leq 0,50$$

3. Procédé selon la revendication 1, dans lequel l'alliage présente une composition dans laquelle X est égal à 0,24 et Y est égal à 0,40.

4. Procédé selon la revendication 1, dans lequel la couche d'enregistrement présente une température de compensation magnétique pratiquement égale à la température ambiante.

5. Procédé selon la revendication 4, dans lequel la température de compensation magnétique de la couche d'enregistrement est inférieure à sa température de Curie.

6. Procédé selon l'une quelconque des revendications précédentes, dans lequel le support d'enregistrement magnétique comprend une base dotée d'une propriété de transmission de la lumière, et ladite couche d'enregistrement est formée sur la base.

7. Procédé selon l'une quelconque des revendications précédentes, dans lequel le procédé utilise une tête optique pour la phase de détection.

8. Procédé selon la revendication 7, dans lequel le procédé utilise une tête optique pour la phase d'application de lumière.

9. Système d'enregistrement et de reproduction comprenant:

un support d'enregistrement magnétique comprenant une couche d'enregistrement constituée d'un alliage terre rare amorphe-métal de transition de composition $Dy_X (Fe_{1-Y}CO_Y)_{1-X}$, avec $0,22 \leq X \leq 0,25$ et $0,35 \leq Y \leq 0,50$, la température de compensation magnétique de la couche d'enregistrement étant inférieure à sa température de Curie et pratiquement égale à la température ambiante ; et

un appareil pour enregistrer et reproduire des informations sur les pistes du support d'enregistrement magnétique, l'appareil comprenant :

une tête magnétique de reproduction des informations enregistrées sur le support d'enregistrement par détection du flux magnétique fuyant de celui-ci, et

un moyen destiné à élever la température d'une zone d'une piste donnée dont les informations doivent être reproduites jusqu'à une valeur située entre sa température de compensation magnétique et sa température de Curie lors de la reproduction de sorte qu'il reste suffisamment de magnétisme résiduel dans la zone de ladite piste donnée pour la reproduction des informations.

FIG. 1

# FIG. 2

# FIG. 3

# FIG. 4

# FIG. 5

# FIG. 6

EP 0 471 527 B1

# FIG. 7

# FIG. 8

OPTICAL HEAD  6

1

5

3

7

# FIG. 9

START

LIGHT BEAM IRRADIATED — S1

TEMPERATURE RISES AT
RECORDING PORTION
( Hc : LOWERED ) — S2

SIGNAL MAGNETIC FIELD APPLIED
BY MAGNETIC HEAD, RECORDING
BEING PERFORMED ONLY ON
PORTIONS WITH SMALLER Hc. — S3

TEMPERATURE DROPS — S4

END

# FIG.10

START

LIGHT BEAM IRRADIATED — S11

TEMPERATURE RISES AT
REPRODUCING PORTION
(Ms: INCREASED) — S12

LEAKAGE FLUX DETECTED BY
MAGNETIC HEAD FROM PORTIONS
WITH GREATER Ms. — S13

TEMPERATURE DROPS — S14

END